# EUROPEAN PATENT APPLICATION

(11) **EP 2 981 140 A1**
(43) Date of publication of application: **03.02.2016**
(21) Application number: 14774384.3
(22) Date of filing: 26.03.2014
(51) Int. Cl.: H04W 72/04, H04W 72/08

(54) **MOBILE COMMUNICATION SYSTEM, BASE STATION, AND USER TERMINAL**

(30) Priority: 27.03.2013 US 201361805798 P
(71) Applicant: Kyocera Corporation, Kyoto-shi, Kyoto 612-8501 (JP)
(72) Inventor: YAMAZAKI, Chiharu, Kyoto-shi Kyoto 612-8501 (JP)
(74) Representative: Schwabe - Sandmair - Marx
(86) International application number: PCT/JP2014/058646
(87) International publication number: WO 2014/157393

(57) **Abstract**

A mobile communication system according to the present invention comprises: a base station; and a user terminal configured to perform uplink communication via a plurality of carriers including a first carrier. The user terminal comprises: a reception unit configured to receive change information for changing a carrier used to transmit a physical uplink control channel to a carrier other than the first carrier from the base station performing uplink communication via at least the first carrier; and a terminal-side control unit configured to change the carrier used to transmit the physical uplink control channel to the carrier other than the first carrier based on the change information.

## Description

### TECHNICAL FIELD

The prevent invention relates to a mobile communication system, a user terminal, and a base station that support carrier aggregation.

### BACKGROUND ART

In 3GPP (3rd Generation Partnership Project) which is a project aiming to standardize a mobile communication system, the standardization of an LTE (Long Term Evolution) Advanced, which is a sophisticated version of LTE, is conducted after 3GPP Release 10.

The LTE Advanced introduces carrier aggregation, in which carriers (frequency bands) in the LTE are positioned as component carriers and communication is performed by simultaneously using a plurality of component carriers, in order to achieve a wider band while ensuring backward compatibility with the LTE (see, for example, Non Patent Document 1).

In uplink carrier aggregation, a plurality of component carriers include primary component carriers used in transmission of a physical uplink control channel (PUCCH). Furthermore, the primary component carrier is used in transmitting NAS (Non-Access Stratum) information.

### PRIOR ART DOCUMENT

### NON-PATENT DOCUMENT

Non Patent Document 1: 3GPP technical specification "TS 36.300 V11.4.0" December 2012

### SUMMARY OF THE INVENTION

However, when a neighboring base station uses the same component carrier (the same frequency band), communication quality may deteriorate due to inter-base station interference.

Particularly, when a control channel such as a physical uplink control channel receives the influence of interference, there is a problem that normal communication is not possible.

Therefore, the present invention provides a mobile communication system, a user terminal, and a base station with which it is possible to avoid interference of a physical uplink control channel.

A mobile communication system according to the present invention comprises: a base station; and a user terminal configured to perform uplink communication via a plurality of carriers including a first carrier. The user terminal comprises: a reception unit configured to receive change information for changing a carrier used to transmit a physical uplink control channel to a carrier other than the first carrier from the base station performing uplink communication via at least the first carrier; and a terminal-side control unit configured to change the carrier used to transmit the physical uplink control channel to the carrier other than the first carrier based on the change information.

### BRIEF DESCRIPTION OF THE DRAWINGS

[Fig. 1] Fig. 1 is a configuration diagram of an LTE system according to an embodiment.
[Fig. 2] Fig. 2 is a block diagram of UE according to the embodiment.
[Fig. 3] Fig. 3 is a block diagram of eNB according to the embodiment.
[Fig. 4] Fig. 4 is a protocol stack diagram of a radio interface in the LTE system.
[Fig. 5] Fig. 5 is a configuration diagram of a radio frame used in the LTE system.
[Fig. 6] Fig. 6 is a diagram showing an operation environment according to the embodiment.
[Fig. 7] Fig. 7 is a diagram for showing an operation according to the embodiment.
[Fig. 8] Fig. 8 is an operation sequence diagram according to the embodiment.

### DESCRIPTION OF THE EMBODIMENT

### [Overview of Embodiment]

A mobile communication system according to an embodiment comprises: a base station; and a user terminal configured to perform uplink communication via a plurality of carriers including a first carrier. The user terminal comprises: a reception unit configured to receive change information for changing a carrier used to transmit a physical uplink control channel to a carrier other than the first carrier from the base station performing uplink communication via at least the first carrier; and a terminal-side control unit configured to change the carrier used to transmit the physical uplink control channel to the carrier other than the first carrier based on the change information.

In an embodiment, the change information includes an identifier for designating the carrier used to transmit the physical uplink control channel, and the terminal-side control unit transmits the physical uplink control channel via a carrier corresponding to the identifier among the plurality of carriers based on the change information.

In an embodiment, the transmission unit transmits the change information individually to user terminal.

In an embodiment, the base station further comprises a base station-side control unit configured to determine, when the base station receives interference information from a neighboring base station, whether to transmit the change information to the user terminal based on the received interference information.

In an embodiment, the mobile communication system supports carrier aggregation. The user terminal performs uplink communication with the base station via a plurality of component carriers as the carriers including a primary component carrier as the first carrier. The change information is information for changing a component carrier used to transmit the physical uplink control channel to a component carrier other than the primary component carrier. The base station comprises a transmission unit configured to transmit the change information to the user terminal. The terminal-side control unit changes the component carrier used to transmit the physical uplink control channel to a component carrier other than the primary component carrier based on the change information.

In an embodiment, the component carrier, other than the primary component carrier, is a secondary component carrier included in a plurality of component carriers. The terminal-side control unit transmits the physical uplink control channel by using the secondary component carrier without changing a component carrier set as the primary component carrier on the basis of the change information.

In an embodiment, the change information includes an identifier for designating the component carrier used in the transmission of the physical uplink control channel. On the basis of the change information, the terminal-side control unit transmits the physical uplink control channel by using a component carrier corresponding to the identifier out of the plurality of component carriers.

In another embodiment, the mobile communication system further comprises: other base station for supporting dual connectivity with the base station. The user terminal performs uplink communication with the base station via the first carrier and performs uplink communication with the other base station via a second carrier included in the plurality of carriers. The terminal-side control unit changes the carrier used to transmit the physical uplink control channel to the second carrier based on the change information, and controls to transmit the physical uplink control channel to the other base station.

A user terminal according to an embodiment is configured to perform uplink communication via a plurality of carriers including a first carrier. The user terminal comprises: a reception unit configured to receive change information from a base station configured to perform uplink communication via at least the first carrier; and a terminal-side control unit configured to change a carrier used to transmit a physical uplink control channel to a carrier other than the first carrier based on the change information.

A base station according to an embodiment is configured to perform uplink communication with a user terminal via a plurality of carriers including a first carrier. The base station comprises: a transmission unit configured to transmit change information for changing a carrier used to transmit a physical uplink control channel to a carrier other than the first carrier to the user terminal.

### [Embodiment]

Hereinafter, with reference to the accompanying drawings, a description will be provided for an embodiment when D2D communication is introduced to a mobile communication system (hereinafter, an "LTE system") configured in accordance with an LTE Advanced.

### (LTE system)

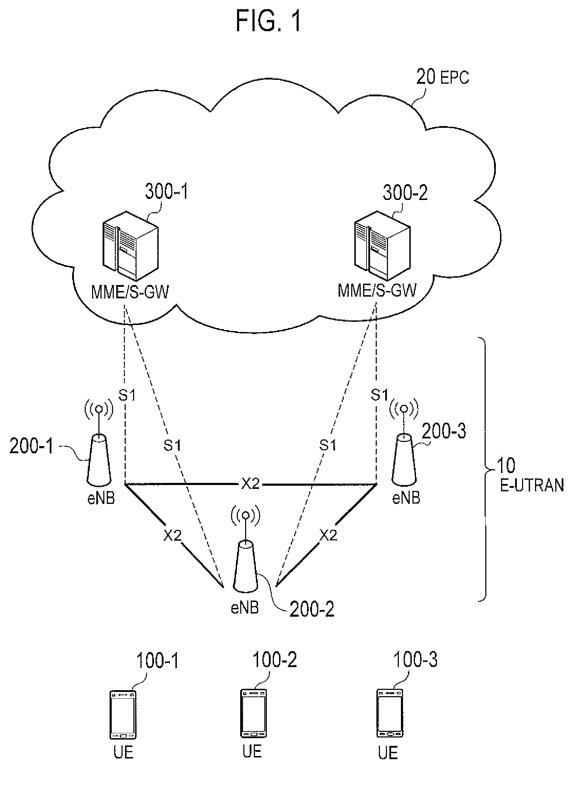

Fig. 1 is a configuration diagram of an LTE system according to a present embodiment. As shown in Fig. 1, the LTE system includes a plurality of UEs (User Equipments) 100, E-UTRAN (Evolved Universal Terrestrial Radio Access Network) 10, and EPC (Evolved Packet Core) 20. The E-UTRAN 10 corresponds to a radio access network and the EPC 20 corresponds to a core network. The E-UTRAN 10 and the EPC 20 configure a network of the LTE system.

The UE 100 is a mobile communication device and performs radio communication with a cell (a serving cell) with which a connection is established. The UE 100 corresponds to the user terminal.

The E-UTRAN 10 includes a plurality of eNBs 200 (evolved Node-Bs). The eNB 200 corresponds to a base station. The eNB 200 manages one or a plurality of cells and performs radio communication with the UE 100 which establishes a connection with the cell of the eNB 200. It is noted that the "cell" is used as a term indicating a minimum unit of a radio communication area, and is also used as a term indicating a function of performing radio communication with the UE 100.

The eNB 200, for example, has a radio resource management (RRM) function, a function of routing user data, and a measurement control function for mobility control and scheduling.

The EPC 20 includes a plurality of MME (Mobility Management Entity)/S-GWs (Serving-Gateways) 300. The MME is a network node that performs various mobility controls and the like, for the UE 100 and corresponds to a controller. The S-GW is a network node that performs control to transfer user data and corresponds to a mobile switching center. The EPC 20 including the MME/S-GW 300 accommodates the eNB 200.

The eNBs 200 are connected mutually via an X2 interface. Furthermore, the eNB 200 is connected to the MME/S-GW 300 via an S1 interface.

Next, the configurations of the UE 100 and the eNB 200 will be described.

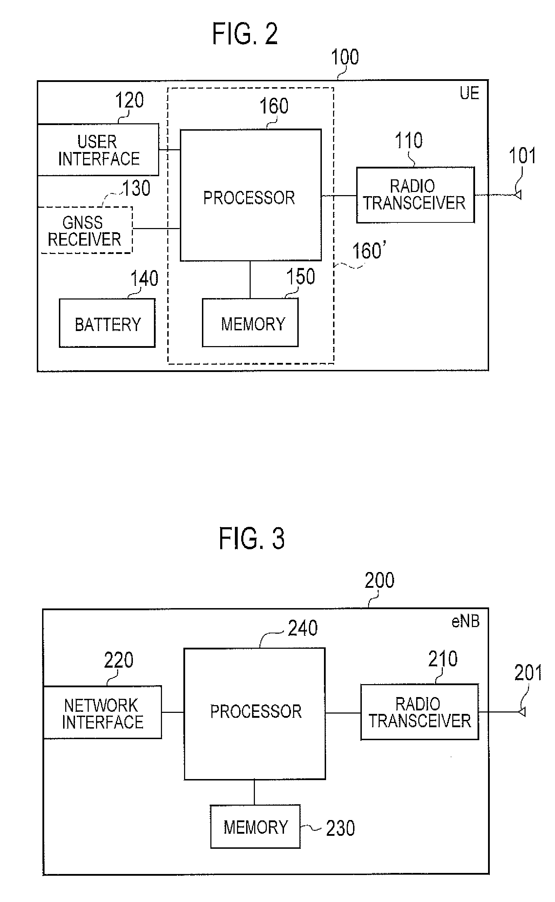

Fig. 2 is a block diagram of the UE 100. As shown in Fig. 2, the UE 100 includes an antenna 101, a radio transceiver 110, a user interface 120, GNSS (Global Navigation Satellite System) receiver 130, a battery 140, a memory 150, and a processor 160. The memory 150 and the processor 160 constitute a terminal-side control unit. The UE 100 may not have the GNSS receiver 130. Furthermore, the memory 150 may be integrally formed with the processor 160, and this set (that is, a chip set) may be called a processor 160' constituting the terminal-side control unit.

The antenna 101 and the radio transceiver 110 are used to transmit and receive a radio signal. The antenna 101 includes a plurality of antenna elements. The radio transceiver 110 converts a baseband signal output from the processor 160 into the radio signal, and transmits the radio signal from the antenna 101. Furthermore, the radio transceiver 110 converts the radio signal received by the antenna 101 into the baseband signal, and outputs the baseband signal to the processor 160.

The user interface 120 is an interface with a user carrying the UE 100, and includes, for example, a display, a microphone, a speaker, various buttons and the like. The user interface 120 receives an operation from a user and outputs a signal indicating the content of the operation to the processor 160. The GNSS receiver 130 receives a GNSS signal in order to obtain location information indicating a geographical location of the UE 100, and outputs the received signal to the processor 160. The battery 140 accumulates a power to be supplied to each block of the UE 100.

The memory 150 stores a program to be executed by the processor 160 and information to be used for a process by the processor 160. The processor 160 includes a baseband processor that performs modulation and demodulation, encoding and decoding and the like on the baseband signal, and a CPU (Central Processing Unit) that performs various processes by executing the program stored in the memory 150. The processor 160 may further include a codec that performs encoding and decoding on sound and video signals. The processor 160 executes various processes and various communication protocols described later.

Fig. 3 is a block diagram of the eNB 200. As shown in Fig. 3, the eNB 200 includes an antenna 201, a radio transceiver 210, a network interface 220, a memory 230, and a processor 240. The memory 230 and the processor 240 constitute a base station-side control unit. Furthermore, the memory 230 may be integrally formed with the processor 240, and this set (that is, a chip set) may be called a processor constituting the base station-side control unit.

The antenna 201 and the radio transceiver 210 are used to transmit and receive a radio signal. The antenna 201 includes a plurality of antenna elements. The radio transceiver 210 converts the baseband signal output from the processor 240 into the radio signal, and transmits the radio signal from the antenna 201. Furthermore, the radio transceiver 210 converts the radio signal received by the antenna 201 into the baseband signal, and outputs the baseband signal to the processor 240.

The network interface 220 is connected to the neighboring eNB 200 via the X2 interface and is connected to the MME/S-GW 300 via the S1 interface. The network interface 220 is used in communication performed on the X2 interface and communication performed on the S1 interface.

The memory 230 stores a program to be executed by the processor 240 and information to be used for a process by the processor 240. The processor 240 includes the baseband processor that performs modulation and demodulation, encoding and decoding and the like on the baseband signal and a CPU that performs various processes by executing the program stored in the memory 230. The processor 240 executes various processes and various communication protocols described later.

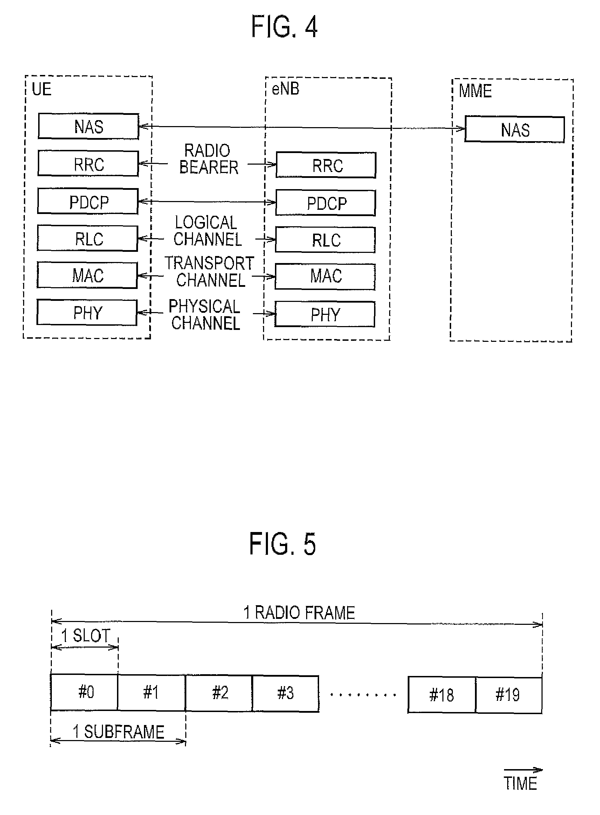

Fig. 4 is a protocol stack diagram of a radio interface in the LTE system. As shown in Fig. 4, the radio interface protocol is classified into a layer 1 to a layer 3 of an OSI reference model, wherein the layer 1 is a physical (PHY) layer. The layer 2 includes MAC (Media Access Control) layer, RLC (Radio Link Control) layer, and PDCP (Packet Data Convergence Protocol) layer. The layer 3 includes RRC (Radio Resource Control) layer.

The PHY layer performs encoding and decoding, modulation and demodulation, antenna mapping and demapping, and resource mapping and demapping. Between the PHY layer of the UE 100 and the PHY layer of the eNB 200, data is transmitted through the physical channel.

The MAC layer performs priority control of data, and a retransmission process and the like by hybrid ARQ (HARQ). Between the MAC layer of the UE 100 and the MAC layer of the eNB 200, data is transmitted via a transport channel. The MAC layer of the eNB 200 includes a transport format of an uplink and a downlink (a transport block size and a modulation and coding scheme (MCS)) and a scheduler for determining a resource block to be assigned.

The RLC layer transmits data to an RLC layer of a reception side by using the functions of the MAC layer and the PHY layer. Between the RLC layer of the UE 100 and the RLC layer of the eNB 200, data is transmitted via a logical channel.

The PDCP layer performs header compression and decompression, and encryption and decryption.

The RRC layer is defined only in a control plane. Between the RRC layer of the UE 100 and the RRC layer of the eNB 200, a control message (an RRC message) for various types of setting is transmitted. The RRC layer controls the logical channel, the transport channel, and the physical channel in response to establishment, re-establishment, and release of a radio bearer. When there is an RRC connection between the RRC of the UE 100 and the RRC of the eNB 200, the UE 100 is in a connected state (an RRC connected state), and when there is no RRC connection, the UE 100 is in an idle state (an RRC idle state).

NAS (Non-Access Stratum) layer positioned above the RRC layer performs session management, mobility management and the like.

Fig. 5 is a configuration diagram of a radio frame used in the LTE system. In the LTE system, OFDMA (Orthogonal Frequency Division Multiplexing Access) is applied to a downlink, and SC-FDMA (Single Carrier Frequency Division Multiple Access) is applied to an uplink, respectively.

As shown in Fig. 5, the radio frame is configured by 10 subframes arranged in a time direction, wherein each subframe is configured by two slots arranged in the time direction. Each subframe has a length of 1 ms and each slot has a length of 0.5 ms. Each subframe includes a plurality of resource blocks (RBs) in a frequency direction, and a plurality of symbols in the time direction. The resource block includes a plurality of subcarriers in the frequency direction. Among radio resources assigned to the UE 100, a frequency resource can be designated by a resource block and a time resource can be designated by a subframe (or slot).

In the downlink, an interval of several symbols at the head of each subframe is a control region used as a physical downlink control channel (PDCCH) for mainly transmitting a control signal. Furthermore, the other interval of each subframe is a region available as a physical downlink shared channel (PDSCH) for mainly transmitting user data.

The PDCCH carries a control signal. The control signal, for example, includes an uplink SI (Scheduling Information), a downlink SI, and a TPC bit. The uplink SI is information indicating the assignment of an uplink radio resource and the downlink SI is information indicating the assignment of a downlink radio resource. The TPC bit is information for instructing an increase or decrease in the uplink transmission power. These types of information are called downlink control information (DCI).

The PDSCH carries a control signal and/or user data. For example, a downlink data region may be assigned only to the user data, or assigned such that the user data and the control signal are multiplexed.

In the uplink, both ends in the frequency direction of each subframe are control regions used as a physical uplink control channel (PUCCH) for mainly transmitting a control signal. Furthermore, the central portion in the frequency direction of each subframe is a region available as a physical uplink shared channel (PUSCH) for mainly transmitting user data.

The PUCCH carries a control signal. The control signal, for example, includes CQI (Channel Quality Indicator), PMI (Precoding Matrix Indicator), RI (Rank Indicator), SR (Scheduling Request), and ACK/NACK and the like. The CQI is information indicating downlink channel quality and is used for deciding a recommended modulation scheme and a coding rate speed to be used in downlink transmission, and the like. The PMI is information indicating a precoder matrix that is preferable to be used for the downlink transmission. The RI is information indicating the number of layers (the number of streams) available for the downlink transmission. The SR is information for requesting the assignment of an uplink radio resource (a resource block). The ACK/NACK is information indicating whether or not a signal transmitted via a downlink physical channel (for example, the PDSCH) has been successfully decoded.

The PUSCH carries a control signal and/or user data. For example, an uplink data region may be assigned only to the user data, or assigned such that the user data and the control signal are multiplexed.

### (Operation according to embodiment)

The LTE system according to the present embodiment supports carrier aggregation. In the carrier aggregation, communication is performed by simultaneously using a plurality of component carriers (CCs). In uplink carrier aggregation, the plurality of CCs include primary component carriers (PCCs) used in transmission of PUCCH. Furthermore, the PCC is used in transmitting NAS information.

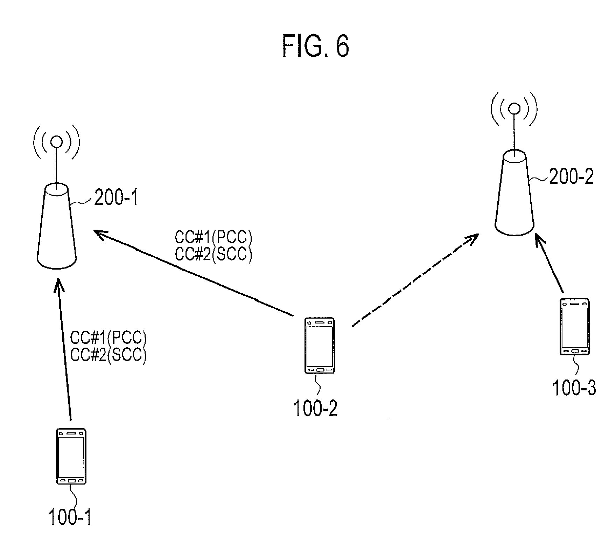

Fig. 6 is a diagram showing an operation environment according to the present embodiment. As shown in Fig. 6, eNB 200-1 and eNB 200-2 adjacent to the eNB 200-1 are installed. UE 100-1 and UE 100-2 exist in a cell of the eNB 200-1. That is, the cell of the eNB 200-1 is a serving cell of each of the UE 100-1 and the UE 100-2. Furthermore, UE 100-3 exists in a cell of the eNB 200-2. That is, the cell of the eNB 200-2 is a serving cell of the UE 100-3.

The eNB 200-1 can use two CCs of CC#1 and CC#2 in uplink communication. The CC#1 is PCC and the CC#2 is a secondary component carrier (SCC).

The eNB 200-1 controls a type 2 (so-called SIB2) of a system information block (SIB) to include frequency information (freqInfo) on the PCC, and transmits the SIB2 in a broadcast manner. The frequency information (freqInfo) includes information (ul-CarrierFreq) indicating a carrier frequency of the PCC, and information (ul-Bandwidth) indicating a frequency bandwidth of the PCC. In addition, the SIB is information that is able to be received by the UE 100 in an idle state. The SIB is provided to DL-SCH that is a kind of a transport channel.

Each of the UE 100-1 and the UE 100-2 designates the CC#1, which is set as the PCC, on the basis of the frequency information (freqInfo) included in the SIB2 from the eNB 200-1. Each of the UE 100-1 and the UE 100-2 establishes an RRC connection with the eNB 200-1, and then performs uplink communication with the eNB 200-1 by using the CC#1 set as the PCC and the CC#2 set as the SCC.

Meanwhile, the eNB 200-2 sets the CC#1 as the PCC and performs uplink communication with the UE 100-3 by using at least the CC#1.

The UE 100-2 is located at a cell edge of the eNB 200-1 and is located in the vicinity of the cell of the eNB 200-2. Thus, an uplink signal transmitted by the UE 100-2 is not only received in the eNB 200-1, but also received in the eNB 200-2.

Thus, the uplink communication between the eNB 200-2 and the UE 100-3 receives the influence of interference from the uplink communication between the eNB 200-1 and the UE 100-2. Particularly, since the PUCCH of the UE 100-3 receives the influence of interference from the PUCCH of the UE 100-2, it is difficult for the eNB 200-2 to decode the PUCCH, so that communication control for the UE 100-3 is not possible.

In such a situation, the eNB 200-1 having determined the UE 100-2 as an interference source transmits, to the UE 100-2, change information for changing CC (hereinafter, "PUCCH transmission CC") used in transmission of the PUCCH to CC (the CC#2) other than the PCC.

The eNB 200-1, for example, controls a message (an RRC message) of an RRC layer to include the change information, and transmits the RRC message to the UE 100-2. Differently from SIB common to all UEs within the cell, the RRC message is a message that can be transmitted individually to UE. Alternatively, the eNB 200-1 may control DCI to include the change information and transmit the DCI to the UE 100-2. As described above, the eNB 200-1 transmits the change information individually to the UE.

The UE 100-2 receives the change information from the eNB 200-1. Then, on the basis of the change information, the UE 100-2 changes the PUCCH transmission CC to the CC (CC#2) other than the PCC. In the present embodiment, the CC (CC#2), other than the PCC, is the SCC. On the basis of the change information, the UE 100-2 transmits the PUCCH by using the SCC (CC#2) without changing the CC set as the PCC.

As a result, the PUCCH of the UE 100-3 avoids the inference from the PUCCH of the UE 100-2.

Furthermore, the reason for not changing the CC set as the PCC is as follows. When the CC set as the PCC is changed, since it is necessary to generally change various types of setting (RRC setting and the like), there is a problem that processing load and signaling significantly increase.

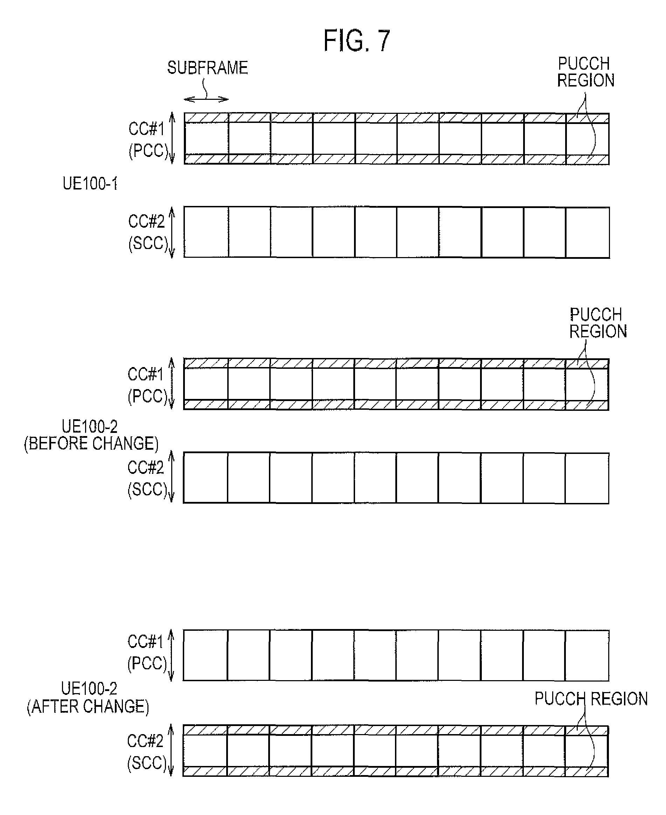

Fig. 7 is a diagram for explaining an operation according to the present embodiment. Fig. 7 illustrates a use state (a carrier structure) corresponding to one radio frame in each CC.

As shown in Fig. 7, the UE 100-1 establishes an RRC connection with the eNB 200-1, and then performs uplink communication with the eNB 200-1 by using the CC#1 set as the PCC and the CC#2 set as the SCC. The CC#1 set as the PCC is provided with the PUCCH region. The CC#2 set as the SCC is not provided with a PUCCH region.

The UE 100-2 establishes an RRC connection with the eNB 200-1, and then performs uplink communication with the eNB 200-1 by using the CC#1 set as the PCC and the CC#2 set as the SCC. The CC#1 set as the PCC is provided with the PUCCH region. The CC#2 set as the SCC is not provided with a PUCCH region.

Then, when the UE 100-2 changes the PUCCH transmission CC to the CC#2 based on the change information from the eNB 200-1, the PUCCH region is not provided to the CC#1, and is provided to the CC#2. Meanwhile, for the UE 100-1, the initial CC setting is maintained.

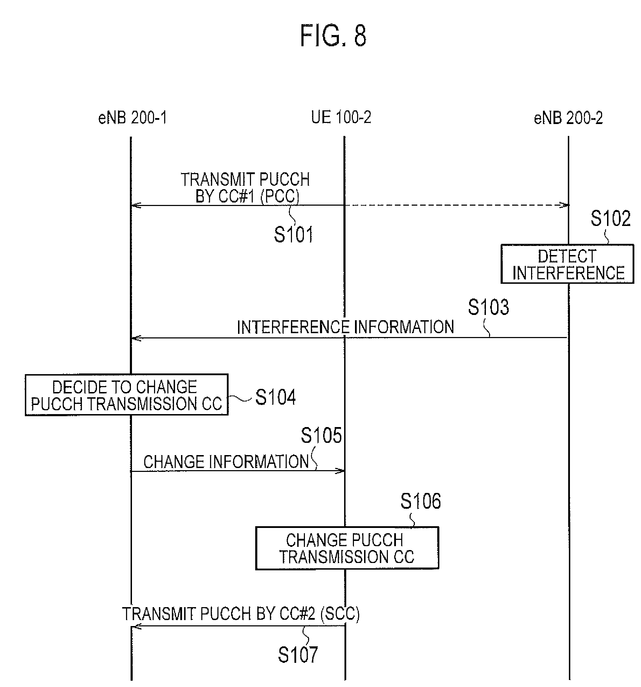

Fig. 8 is an operation sequence diagram according to the present embodiment. Fig. 8 illustrates an operation of each of the eNB 200-1, the eNB 200-2, and the UE 100-2.

As shown in Fig. 8, in step S101, the UE 100-2 transmits the PUCCH by using the CC#1 set as the PCC. The UE 100-2 may transmit an uplink reference signal (SRS; Sounding Reference Signal) together with transmitting the PUCCH. The PUCCH of the UE 100-2 is not only received in the eNB 200-1, but also received in the eNB 200-2.

In step S102, the eNB 200-2 detects uplink interference power. On the basis of a setting parameter and the like of an uplink signal (DMRS and/or SRS) received from the UE 100-2, the eNB 200-2 estimates the UE 100-2 as an interference source, and generates interference information including information indicating the UE 100-2. The setting parameter indicates a radio resource and the like in which the uplink signal is arranged. For example, the eNB 200-2 is notified of a subframe to be transmitted (a subframe to which PUSCH is scheduled to be assigned in the case of DMRS, a subframe periodically decided in the case of SRS, or a subframe scheduled to be assigned in the case of aperiodic) and a reference signal sequence used in the subframe from the eNB 200-1, and estimates the interference source according to whether it is possible to detect this signal sequence in this subframe and the degree of detected power.

Alternatively, the eNB 200-2 does not estimate the interference source, and generates interference information including information indicating the setting parameter of the uplink signal received from the UE 100-2. In this case, the eNB 200-2 side sends a subframe, for which blind detection (detection of no information from the eNB 100-1) was performed, and a reference signal sequence to the eNB 200-1 as the interference information, and the eNB 200-1 side designates the interference source by performing matching.

In step S103, the eNB 200-2 transmits the interference information to the eNB 200-1 on the X2 interface or the S1 interface.

In step S104, on the basis of the interference information received from the eNB 200-2, the eNB 200-1 determines whether to transmit change information to each of UEs within the cell of the eNB 200-1. When the interference information includes information indicating the interference source, the eNB 200-1 determines to transmit the change information to the interference source. Alternatively, when the interference information includes information indicating the setting parameter of the uplink signal, the eNB 200-1 estimates the interference source on the basis of the setting parameter and determines to transmit the change information to the interference source. Hereinafter, a description will be given on the assumption that the eNB 200-1 determines to transmit the change information to the UE 100-2 which is the interference source.

In step S105, the eNB 200-1 transmits, to the UE 100-2, the change information for changing the PUCCH transmission CC to the CC (CC#2) other than the PCC. The change information includes an identifier for designating the PUCCH transmission CC (CC#2) after change.

In step S106, on the basis of the change information from the eNB 200-1, the UE 100-2 decides to change the PUCCH transmission CC to the CC (CC#2) other than the PCC. Specifically, the UE 100-2 decides the CC (CC#2), which corresponds to the identifier included in the change information, as new CC to be used in the transmission of the PUCCH.

In step S107, the UE 100-2 transmits the PUCCH by using the CC (CC#2) that is set as the SCC and corresponds to the identifier included in the change information.

As described above, the UE 100-2 changes the PUCCH transmission CC to the CC (CC#2) other than the PCC, so that the eNB 200-2 and the UE 100-3 can avoid PUCCH interference caused by the PUCCH of the UE 100-2, thereby performing normal communication.

### [Modification of embodiment]

In the aforementioned embodiment, when the eNB 200-2 detects uplink interference, the eNB 200-2 transmits interference information to the eNB 200-1, and the eNB 200-1 performs control of changing the PUCCH transmission CC.

Meanwhile, in a present modification, when the eNB 200-2 uses a plurality of CCs in uplink communication, the following control is performed instead of the aforementioned control.

Specifically, in response to detection of uplink interference power, the eNB 200-2 transmits, to the UE 100-3, change information for changing the PUCCH transmission CC to CC (for example, the CC#2) other than the PCC. On the basis of the change information from the eNB 200-2, the UE 100-3 changes the PUCCH transmission CC to the CC (for example, the CC#2) other than the PCC.

As a result, similarly to the aforementioned embodiment, the eNB 200-2 and the UE 100-3 can avoid PUCCH interference caused by the PUCCH of the UE 100-2, thereby performing normal communication.

### [Other Embodiments]

There has been described in the above embodiment the case in which the present invention is applied to the LTE system for supporting carrier aggregation, but the present invention is not limited thereto. The present invention may be applied to a LTE system for supporting dual connectivity.

The dual connectivity is an operation method in which the RRC-connected UE uses wireless resources (carriers) provided from at least two different network points (such as two eNB 200) connected to the backhaul.

For example, there will be described a case in which an eNB 200-3 is installed in the operation environment according to the above embodiment.

The eNB 200-3 is located near the eNB 200-1. The eNB 200-3 may be a neighboring base station to the eNB 200-1. Alternatively, when the eNB 200-1 manages a macro cell, the eNB 200-3 may be installed within the macro cell to manage a small cell.

The eNB 200-3 is an eNB for supporting dual connectivity with the eNB 200-1. The UE 100-2 establishes RRC connection with eNB 200-1, and performs uplink communication with the eNB 200-1 via the carrier #1 and performs uplink communication with the eNB 200-3 via the carrier #2. Therefore, the UE 100-2 uses the wireless resources (the carrier #1 and the carrier #2) provided from the eNB 200-1 and the eNB 200-3. The UE 100-2 transmits PUCCH via the carrier #1. The UE 100-2 may establish a communication bearer with the eNB 200-3 without establishing RRC connection with the eNB 200-3.

On the other hand, as in the above embodiment, the eNB 200-2 performs uplink communication with the UE 100-3 via the carrier #1. The UE 100-3 transmits PUCCH via the carrier #1.

In this case, as in the above embodiment, PUCCH of the UE 100-3 is influenced by an interference from PUCCH of the UE 100-2, and it is difficult for the eNB 200-2 to decode the PUCCH, so that communication control for the UE 100-3 is not possible.

Under such a situation, the eNB 200-1 which determines that the UE 100-2 is an interference source can transmit the change information for changing the carrier used to transmit PUCCH (which will be called PCUUH transmission carrier below) to the carrier #2 other than the carrier #1. The eNB 200-1 can transmit the change information individually to UE as in the above embodiment. The change information may include an identifier for designating a carrier (carrier #2) used to transmit PUCCH.

The UE 100-2 receiving the change information from the eNB 200-1 changes the PUCCH transmission carrier to the carrier #2 based on the change information. The UE 100-2 can transmit PUCCH via a carrier corresponding to a carrier corresponding to the identifier among the plurality of carriers based on the change information. Thereafter, the UE 100-2 transmits PUCCH to the eNB 200-3 via the carrier #2. Thereby, as in the above embodiment, the eNB 200-2 and the UE 100-3 can avoid the PUCCH interference caused by PUCCH of the UE 100-2, and thus can perform normal communication.

Further, the UE 100-2 can disconnect RRC connection with the eNB 200-1 and transmit PUCCH via the carrier #2 based on the change information without establishing RRC connection with the eNB 200-3. Thereby, an increase in processing load and signaling due to the RRC connection setting change is not caused.

Further, as in the above embodiment, when receiving interference information from the eNB 200-2, the eNB 200-1 may determine whether to transmit the change information to the UE 100-2 based on the received interference information.

Further, there has been described in the above embodiment the case in which the present invention is applied to the LTE system, but the present invention may be applied to any systems other than the LTE system, not limited to the LTE system.

In addition, the entire content of US Provisional Application No. 61/805798 (filed on March 27, 2013) is incorporated in the present specification by reference.

### INDUSTRIAL APPLICABILITY

As described above, the mobile communication system, the base station, and the user terminal according to the present invention are able to avoid interference of a physical uplink control channel, and thus are useful for a mobile communication field.

## Claims

1. A mobile communication system comprising:
a base station; and
a user terminal configured to perform uplink communication via a plurality of carriers including a first carrier,
wherein the user terminal comprises:
a reception unit configured to receive change information for changing a carrier used to transmit a physical uplink control channel to a carrier other than the first carrier from the base station performing uplink communication via at least the first carrier; and
a terminal-side control unit configured to change the carrier used to transmit the physical uplink control channel to the carrier other than the first carrier based on the change information.

2. The mobile communication system according to claim 1, wherein
the change information includes an identifier for designating the carrier used to transmit the physical uplink control channel, and
the terminal-side control unit transmits the physical uplink control channel via a carrier corresponding to the identifier among the plurality of carriers based on the change information.

3. The mobile communication system according to claim 1, wherein
the transmission unit transmits the change information individually to user terminal.

4. The mobile communication system according to claim 1, wherein
the base station further comprises a base station-side control unit configured to determine, when the base station receives interference information from a neighboring base station, whether to transmit the change information to the user terminal based on the received interference information.

5. The mobile communication system according to claim 1,
the mobile communication system supporting carrier aggregation, wherein
the user terminal performs uplink communication with the base station via a plurality of component carriers as the carriers including a primary component carrier as the first carrier,
the change information is information for changing a component carrier used to transmit the physical uplink control channel to a component carrier other than the primary component carrier,
the base station comprises a transmission unit configured to transmit the change information to the user terminal, and
the terminal-side control unit changes the component carrier used to transmit the physical uplink control channel to a component carrier other than the primary component carrier based on the change information.

6. The mobile communication system according to claim 5, wherein
the component carrier, other than the primary component carrier, is a secondary component carrier included in a plurality of component carriers, and
the terminal-side control unit transmits the physical uplink control channel by using the secondary component carrier without changing a component carrier set as the primary component carrier on the basis of the change information.

7. The mobile communication system according to claim 5, wherein
the change information includes an identifier for designating the component carrier used in the transmission of the physical uplink control channel, and
on the basis of the change information, the terminal-side control unit transmits the physical uplink control channel by using a component carrier corresponding to the identifier out of the plurality of component carriers.

8. The mobile communication system according to claim 1, further comprising:
other base station for supporting dual connectivity with the base station, wherein
the user terminal performs uplink communication with the base station via the first carrier and performs uplink communication with the other base station via a second carrier included in the plurality of carriers, and
the terminal-side control unit changes the carrier used to transmit the physical uplink control channel to the second carrier based on the change information, and controls to transmit the physical uplink control channel to the other base station.

9. A user terminal configured to perform uplink communication via a plurality of carriers including a first carrier, the user terminal comprising:
a reception unit configured to receive change information from a base station configured to perform uplink communication via at least the first carrier; and
a terminal-side control unit configured to change a carrier used to transmit a physical uplink control channel to a carrier other than the first carrier based on the change information.

10. A base station configured to perform uplink communication with a user terminal via a plurality of carriers including a first carrier, the base station comprising:
a transmission unit configured to transmit change information for changing a carrier used to transmit a physical uplink control channel to a carrier other than the first carrier to the user terminal.
